# EUROPEAN PATENT APPLICATION

(11) **EP 3 474 556 A1**
(43) Date of publication of application: **24.04.2019**
(21) Application number: 17197669.9
(22) Date of filing: 23.10.2017
(51) Int. Cl.: H04N 21/4147, H04N 21/433, H04N 21/44, H04N 21/454, H04N 21/81

(54) **SYSTEM AND METHOD FOR AUTOMATIC ADJUSTMENT OF SCHEDULED RECORDING TIME**

(71) Applicant: Advanced Digital Broadcast S.A., 1262 Eysins (CH)
(72) Inventor: Skowronski, Zbigniew, 65-119 Zielona Gora (PL)
(74) Representative: Blonski, Pawel

(57) **Abstract**

Method for automatic adjustment of a scheduled recording time of an A/V data stream being recorded, the method comprising the steps of: selectively collecting video data frames, from said A/V data stream, within specified time intervals; detecting a start and an end of an advertisements block present in said A/V data stream; for each time interval, computing a fingerprint in case such time interval does not fall within said advertisements block; after said end of the advertisements block: accepting a request to verify a continuity of said A/V data stream being recorded; selectively collecting reference video data frames for comparison and computing a reference fingerprint for said reference video data frames; comparing said reference fingerprint with at least one fingerprint collected prior to the start of said advertisements block in order to obtain a level of similarity between said fingerprints; based on the level of similarity, taking a decision whether to adjust the scheduled recording time of said A/V data stream.

## Description

### TECHNICAL FIELD

The present invention relates to a system and method for automatic adjustment of scheduled recording time. In particular the present invention relates to extending or reducing recording time of audio/video content.

### BACKGROUND OF THE INVENTION

Prior art defines so called digital video recorders (DVR), that may be programmed to record an event at specified time. This is typically done by manually entering start and end time of a recording or by selecting an appropriate event entry in an electronic program guide (EPG) comprising information related to airing of different events on different channels.

When a user has entered the recording time and channel, typically there is assumed so-called recording lead-in and lead-out time customarily set within a range of 5 to 15 minutes for both parameters respectively.

Use of an EPG allows a user to specify recording a series of programs. The DVR can access the EPG to find each instance of that program that is scheduled. In more advanced implementations a use of the EPG may allow the DVR to accept a keyword from the user and identify programs described in the EPG by the specified keyword or automatically schedule recordings based on user's preferences.

A drawback, of scheduling recording by time only, is that frequently the aired events have a varying duration. This may either be decreased duration (for example a sport event may be shortened due to bad weather conditions, an accident or other reasons) or extended duration (for example an extra time of a match).

Thus, it may often happen that either data storage space will be used inefficiently (recording for too long) or that the television program, scheduled for recording, will not be recorded in full (recording for too short).

In order to address the aforementioned drawbacks, prior art defies solutions presented below.

A publication of US 20110311205 A1, entitled "Recording of sports related television programming" discloses a recording system where a sporting event has a game clock; the sports data comprises a data feed including repeated indications of time remaining on the game clock; and the system dynamically adjusts the values of the recording parameters, in particular adjusts a parameter that extends the scheduled ending time of the recording based on an indication of time remaining on the game clock.

A disadvantage of this system is twofold: (1) a game clock detection is required (e.g. sports feed from a news outlet, which is an additional data source that must be monitored and kept up to date) and (2) the system is applicable only to sport events. Further, it is known that television broadcasters usually do not bother with updating EPG data in real time and hence a preferred solution for recording time adjustment is that its operative irrespective of any additional information from the television broadcaster.

Another publication, US 20100040345 A1, entitled "Automatic detection of program subject matter and scheduling padding", discloses that in response to a digital video recording device determining that a program has a particular characteristic, the digital video recording device prompts a user to adjust program recording parameters.

A disadvantage of this system is a fixed recording time after the initial setting, which is determined when programming the recording in the DVR. Thus, the system does not adjust in real time, for example as the US 20110311205 A1 system.

It would be advantageous to provide a system that would adjust the recording time based on data already available to the DVR and make such adjustment in real time.

The aim of the development of the present invention is an improved (as outlined above) system and method for automatic adjustment of scheduled recording time.

### SUMMARY AND OBJECTS OF THE PRESENT INVENTION

A first object of the present invention is a method for automatic adjustment of a scheduled recording time of an audio and/or video data stream being recorded, the method being characterized in that it comprises the steps of: selectively collecting video data frames, from said audio and/or video data stream, within specified time intervals; detecting a start and an end of an advertisements block present in said audio and/or video data stream; for each time interval, for which video data frames have been selectively collected, computing a fingerprint in case such time interval does not fall within said advertisements block; after said end of the advertisements block: accepting a request to verify a continuity of said audio and/or video data stream being recorded; selectively collecting reference video data frames for comparison and computing a reference fingerprint for said reference video data frames; comparing said reference fingerprint with at least one fingerprint collected prior to the start of said advertisements block in order to obtain a level of similarity between said fingerprints; based on the level of similarity, taking a decision whether to adjust the scheduled recording time of said audio and/or video data stream.

Preferably, said selective collecting concerns collecting N of consecutive video data frames at defined timings.

Preferably, a type of said video data frame is taken into consideration during said selective collecting.

Preferably, said fingerprint is a data set, smaller than the referred data, that may be compared in order to determine a similarity level with another fingerprint. Preferably, when determining said level of similarity there is executed one of: computing an average similarity level among all fingerprints pairs; selecting a subset of top results; setting a threshold for a top result.

Preferably, at least one of said time intervals falls after said end of the advertisements block.

Preferably, there is executed a step of applying a time threshold that indicates how much time of said recording needs to pass before the method is invoked.

Preferably, said accepting a request to verify a continuity is executed every time a predefined interval has passed.

Preferably, said selective collecting is executed as a first-in-first-out buffer of a specified size.

Preferably, said first-in-first-out buffer comprises said fingerprints data.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

A further object of the present invention is a system executing the method of the invention.

### BRIEF DESCRIPTION OF THE DRAWINGS

These and other objects of the invention presented herein, are accomplished by providing a system and method for automatic adjustment of scheduled recording time. Further details and features of the present invention, its nature and various advantages will become more apparent from the following detailed description of the preferred embodiments shown in a drawing, in which:
Fig. 1 presents a diagram of the system according to the present invention;
Fig. 2 presents a diagram of memory content;
Fig. 3 presents General Time Parameters for Recordings;
Fig. 4 is an overview of an audio/video data stream;
Figs. 5A-B are an overview of timing parameters according to the present invention.
Figs. 6A-C show three recording scenarios using parameters presented with reference to Figs. 5A-B;
Figs. 7A-C depict data acquisition and analysis scenarios;
Fig. 8A shows data collecting scenario when a set of audio and/or video fingerprints is generated for a given processing window;
Fig. 8B presents a state of a processing window's FIFO queue of audio and/or video fingerprints;
Fig. 9 shows a scenario of data similarity analysis;
Figs. 10A-C show a detailed method according to the present invention;
Fig. 11 shows a high-level method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The following specification refers to an audio/video data signal but video only or audio only data signals may be processed in the same manner.

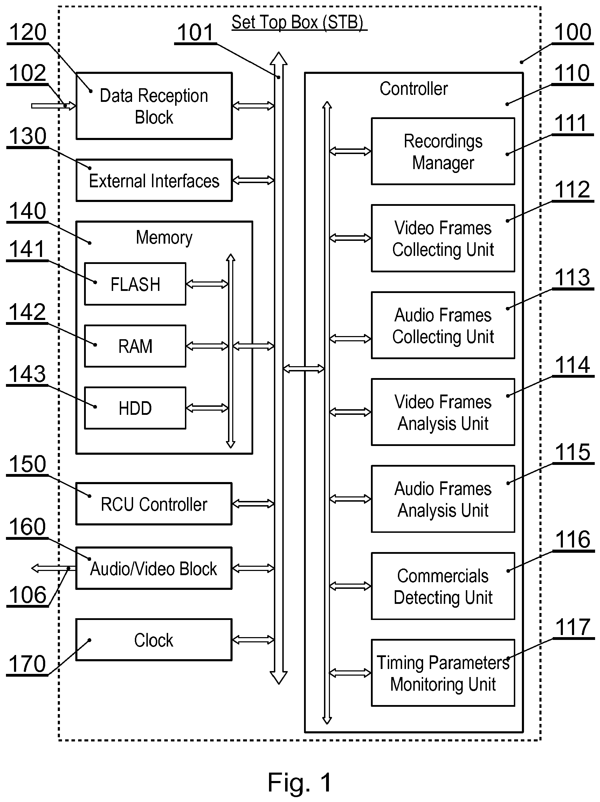

Fig. 1 presents a diagram of the system according to the present invention. The system is an audio/video receiver, which in this case may be a set-top box (STB) (100).

The STB (100) receives data (102) via a suitable data reception block (120) which may be configured to receive satellite and/or terrestrial and/or cable and/or Inter-net data.

An external interfaces module (130) typically responsible for bidirectional communication external devices (e.g. using wireless interface e.g. Wi-Fi, UMTS, LTE, Bluetooth, USB or the like). Other typical modules include a memory (140) (which may comprise different kinds of memory such as flash (141) and/or RAM (142) and/or HDD (143)) for storing data (including software, recordings, temporary data, configuration and the like) as well as software executed by a controller (110), a clock module (170) configured to provide clock reference for other modules of the system, and an audio/video block (160) configured to process audio/video data, received via the data reception block (120), and output an audio/video signal by means of an audio/video output interface (106).

Further, the STB (100) comprises a remote control unit controller (150) configured to receive commands from a remote control unit (typically using an infrared communication).

The controller (110) comprises a Recordings Manager (111) responsible for maintaining lists of executed and scheduled recordings. Typically, this will involve references to content as well as metadata describing scheduled recordings by channel and time.

A Video Frames Collecting Unit (112) is a sampling module configured for selectively reading video samples into a buffer, which is subsequently analyzed. A corresponding Audio Frames Collecting Unit (113) may by applied to collect relevant audio data.

A Video Frames Analysis Unit (114) is configured to evaluate data collected by the Video Frames Collecting Unit (112) and to generate a video fingerprint for a video data frame or typically for a group (or otherwise a sequence) of video data frames. Said video fingerprint is typically a reasonably sized (significantly smaller than the referred data) data set that may be efficiently compared in order to determine a similarity level with another video fingerprint.

The methods employed to generate such video fingerprints are beyond the scope of the present invention but the following or similar methods may be utilized in order to execute this task:
- "Method and Apparatus for Image Frame Identification and Video Stream Comparison" - US 20160227275 A1;
- "Video entity recognition in compressed digital video streams" - US7809154B2;
- "Video comparison using color histograms" - US 8897554 B2.

An Audio Frames Analysis Unit (115) is configured to evaluate data collected by the Audio Frames Collecting Unit (113) and to generate an audio fingerprint for an audio data frame or typically for a group (or otherwise a sequence) of audio data frames. Said audio fingerprint is typically a reasonably sized (significantly smaller than the referred data) data set that may be efficiently compared in order to determine a similarity level with another audio fingerprint.

The methods employed to generate such audio fingerprints are beyond the scope of the present invention but the following or similar methods may be utilized in order to execute this task:
- "Audio fingerprinting" - US 9286902 B2. Herein, based on fingerprints, a machine may determine a likelihood that a candidate audio data matches a reference audio data and cause a device to present the determined likelihood;
- "Audio identification using wavelet-based signatures" - US 8411977 B1. This system takes an audio signal and converts it to a series of representations. These representations can be a small set of wavelet coefficients. The system can store the representations, and the representations can be used for matching purposes;
- "Music similarity function based on signal analysis" - US 7031980 B2. This invention's spectral distance measure captures information about the novelty of the audio spectrum. For each piece of audio, the invention computes a "signature" based on spectral features;
- "System and method for recognizing audio pieces via audio fingerprinting" - US 7487180 B2. Herein, a fingerprint extraction engine automatically generates a compact representation, hereinafter referred to as a fingerprint of signature, of the audio file, for use as a unique identifier of the audio piece.

In certain embodiments of the present invention there may only be present Video Frames Collecting Unit (112) coupled to the Video Frames Analysis Unit (114) or alternatively only the Audio Frames Collecting Unit (113) coupled to the Audio Frames Analysis Unit (115).

Another module of the controller (110) is a Commercials Detecting Unit (116) configured to detect advertising blocks present in the received data. It is irrelevant whether such blocks are signaled or not. The methods employed to detect such advertising blocks are beyond the scope of the present invention but the following or similar methods may be utilized in order to execute this task:
- "Advertisement detection" - US 9147112 B2;
- "Method and system of real-time identification of an audiovisual advertisement in a data stream" - US 8116462 B2;
- "Detecting advertisements using subtitle repetition" - US 8832730 B1.

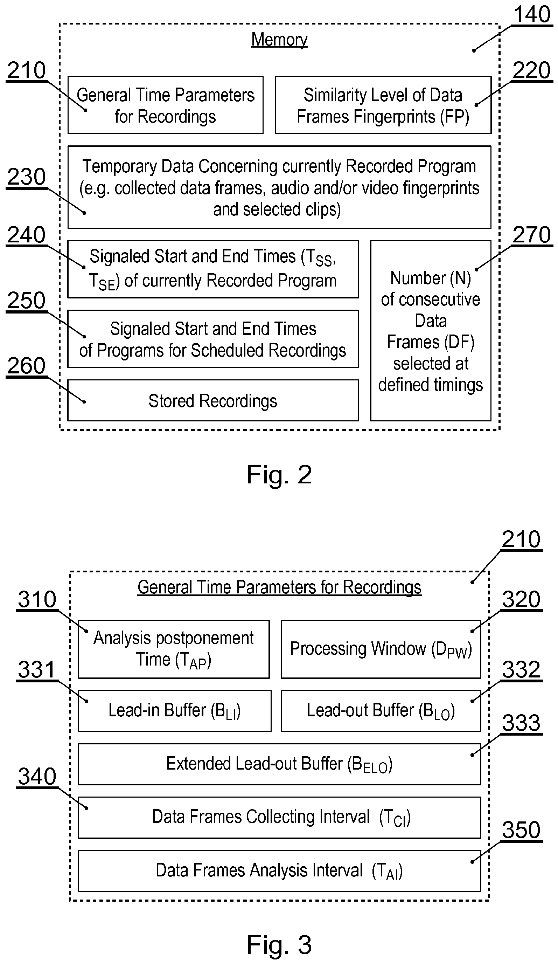

Another module of the controller (110) is a Time Parameters Monitoring Unit (117) configured to monitor system clock(s) with respect to system configuration presented in more details in Fig. 3 listing General Time Parameters for Recordings (210).

Fig. 2 presents a diagram of memory (140) content. A General Time Parameters for Recordings (210) section refers to parameters applicable to all recordings i.e. common parameters described later with reference to Fig. 3.

The next section refers to Similarity Level of Data Frames Fingerprints (220) (Similarity Level of Video and/ or Audio Frames Fingerprints where applicable). Threshold vales may be stored here that will delimit matching frames or sequences from differing frames or sequence (be it video or audio or audio/video). Such threshold will typically be expressed in percentage.

Further, the memory (140), comprises Temporary Data Concerning currently Recorded Program (e.g. collected data frames, audio and/or video fingerprints, selected clips) (230).

Another section of the memory (140) comprises information on Signaled Start and End Times (T_{SS}, T_{SE}) of currently Recorded Program (240) (e.g. 25 Oct 2017 starting 11:25 and ending 12:15). This information is typically received prior to airing or availability of the currently recorded content. In some case such information is available via an electronic program guide. Similarly, the memory area (250) comprises the same parameters for other scheduled recordings - Signaled Start and End Times of Programs for Scheduled Recordings.

The next section, of the memory (140), refers to content of the stored recordings (260) while the section (270) defines a Number (N) of consecutive Data Frames selected at defined timings. This is the number used by the Audio Frames Collecting Unit (113) and the Video Frames Collecting Unit (112) in order to sample frames within said predefined timing intervals. Additionally said video or audio fingerprint will be calculated over said N data frames (270).

The system may also allow selection of the type of said N frames, i.e. for example IDR frames (instantaneous decoding refresh) or I frames only may be collected. Other scenarios of frames selection are also possible, for example with respect to audio data, N may express a duration of audio samples in seconds.

Fig. 3 presents General Time Parameters for Recordings (210). The first parameter is an Analysis Postponement Time (T_{AP}) (310), which defines how much time of recording needs to pass before the system according to the present invention starts its analysis. Typically, this lag time will be defined in minutes or percentage of total time of the scheduled recording. For example, the analysis will commence when 15 minutes of the event have passed or 20% of the event duration have passed.

Parameters (331) and (332) define lead in and out times for a scheduled recording. Typically, recordings are extended by given time amounts such as 5 minutes subtracted from the signaled beginning time and added to the end time. Thus, a program scheduled for 11:45 to 12:45 will be nominally recorded between 11:40 and 12:50.

Parameter (320) defines Processing Window (D_{PW}), which denotes a period of time, for which said video or audio fingerprints are stored. Thus, this time is preferably a multiplication of a Data Frames Collecting Interval (T_{CI}) (340) denoting a time during which said N data frames (270) are collected. Another preferable requirement is that a Processing Window (D_{PW}) is longer than the longest envisages advertisements block or is set up to hold a fixed number of most recent video or audio fingerprints.

A further parameter (333) called Extended Lead-out Buffer (B_{ELO}) is a time added to the lead-out time (332) each time a verification is made that in proximity to the end of the time specified by the lead-out time (332) the event being recorded has not yet completed. This time may for example be set to a time equal to the lead-out time (332), Data Frames Analysis Interval (T_{AI}) (350) or be different according to user's needs.

A Data Frames Analysis Interval (T_{AI}) (350) is a time, which denotes separation of points in time when data analysis, according to the present invention, is executed. In some cases this time interval may be equal to the Processing Window (D_{PW}) (320) but may be different. Typically this, Data Frames Analysis Interval will be expressed in minutes and will be a multiple of the Data Frames Collecting Interval (T_{CI}) (340).

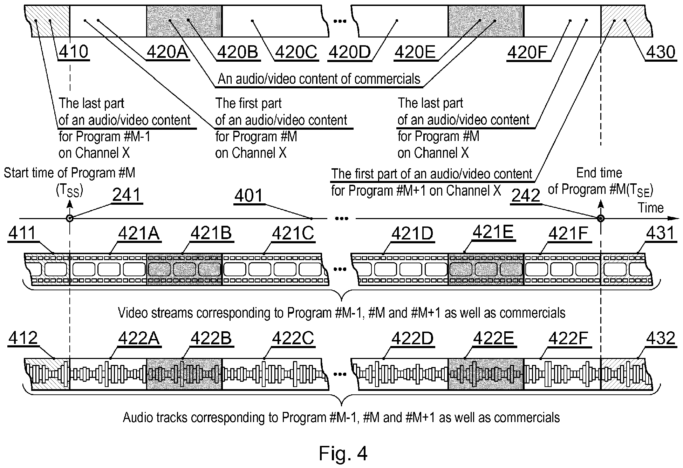

Fig. 4 is an overview of an audio/video data stream shown with respect to a time axis (401). The audio/video data stream comprises at least one video data stream corresponding to events such as Program #M-1, #M and #M+1 as well as commercials. Additionally, the audio/video data stream comprises at least one audio track corresponding to events such as Program #M-1, #M and #M+1 as well as commercials.

Said Program #M-1, #M and #M+1 have been marked as (410, 420, 430) respectively.

The program #M has signaled start and end times (Tss, T_{SE}) as per data stored in the memory block (240). The program #M (420) spans between time (241) and (242) and comprises data sections (420A - 420F) that include video data sections (421A - 421F) as well as audio data sections (422A - 422F). Among the video data sections (421A - 421F) there are sections related to commercials/advertising (421B, 421E) with corresponding audio data sections (422B, 422E). The remaining sections (420A, 420C, 420D, 420F) correspond to normal audio/video content of the programming event.

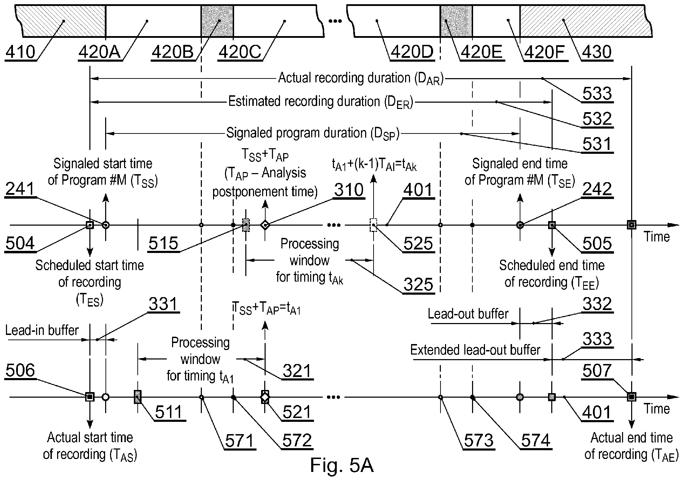

Fig. 5A-B are an overview of timing parameters according to the present invention. The Signaled program duration (D_{SP}) (531) is a time between said signaled T_{SS} and T_{SE} (240). Thus, this is a time that is initially known to a receiver as broadcasting time (or availability time in general). Based on the (D_{SP}) (531) the system calculates an Estimated recording duration (D_{ER}) (532), which equals (D_{SP}) (531) extended by the Lead-in Buffer (B_{LI}) (331) and the Lead-out Buffer (B_{LO}) (332) respectively. To this end, a point in time (504) denotes a Scheduled start time of recording (T_{ES}) and a point in time (505) denotes a Scheduled end time of recording (T_{EE}).

Lastly, there may be present an Actual recording duration (D_{AR}) (533), which is a result of data processing according to the present invention, that equals to the (D_{ER}) (532) corrected by the Extended Lead-out Buffer (B_{ELO}) (333). To this end, a point in time (506) denotes an actual start time of recording (T_{AS}) and a point in time (507) denotes an actual end time of recording (T_{AE}).

In Fig. 5A respective advertisements blocks (420B, 420E) have been identified by providing their start and end times, which for the (420B) are (571) start and (572) end while for the (420E) are (573) start and (574) end.

Further, Fig. 5A defines two exemplary processing windows (321, 325). As previously explained, a processing window is a period of time (320), for which said video or audio fingerprints are stored. For example, processing window may be 15 minutes long.

Data fingerprints (230) are collected such that a full processing window of data is available at the analysis postponement time (T_{AP}) (310). This is the case with the processing window (321) starting at (511) and ending at (521) so that data analysis may be executed at a time t_{A1} (591).

Correspondingly, the processing window (325) is a data span that will be analyzed at a time t_{Ak} (595).

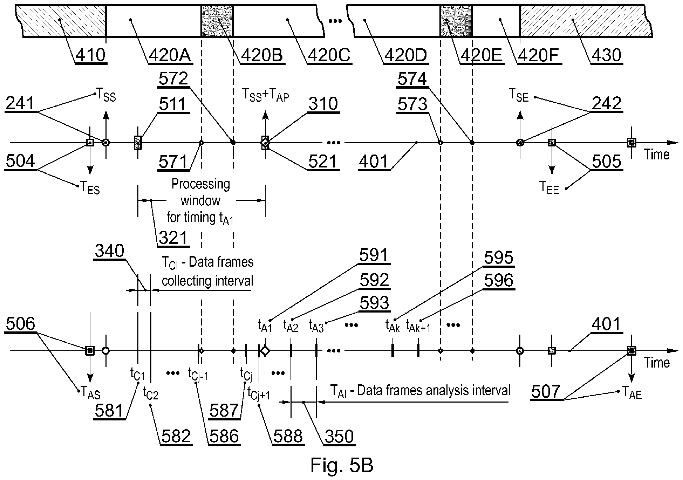

Fig. 5B additionally defines examples of data frames collecting intervals (340) and data frames analysis intervals (350) on the time axis (401). In may be readily seen that for example the processing window (321) comprises data frames collecting intervals (340) starting at t_{C1} (581) and ending at t_{Cj+1} (588) wherein a plurality of T_{CI} (582 - 587) are present there-between.

Relative parameters such as T_{CI}, T_{AI} (340, 350) or D_{PW} (320) are preferably calculated with respect to the beginning of recording i.e. T_{ES} (504).

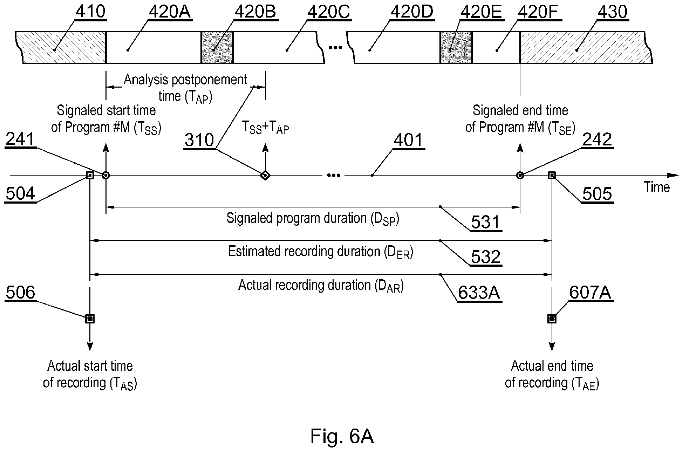

Figs. 6A-C show three recording scenarios using parameters presented with reference to Figs. 5A-B. All reference numerals in Figs. 6A-C starting with a digit other than '6' have been previously introduced in the specification and thus refer to already described items.

Fig. 6A presents a scenario where the scheduled recording ends on time, thus there is not any requirement to extend the recording time and actual duration D_{AR} (633A) equals the estimated duration D_{ER} (532). Correspondingly, timing (504) equals (506) and timing (505) equals (607A), which is the end of the scheduled recording.

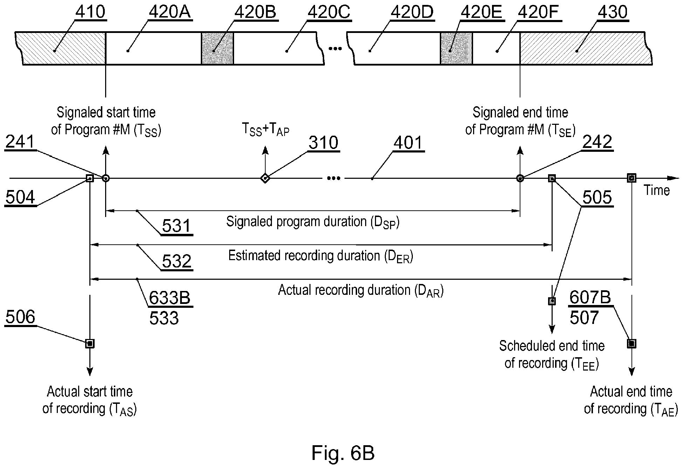

Fig. 6B presents a scenario where the scheduled recording ends later than the estimated recording duration (D_{ER}). An analysis, according to the present invention, results in determining that at the time (505) the recorded program is still ongoing, therefore the method will extend the recording time by the Extended Lead-out Buffer (B_{ELO}) (333). The verification of recording's end will be executed in a loop, thus the recording may be in real life extended numerous times.

In the example given in Fig. 6B, the recording has been extended by a time starting at point (505) and ending at a point (607B). Thus, the Actual recording duration (D_{AR}) (633B) spans between time (506) and (507).

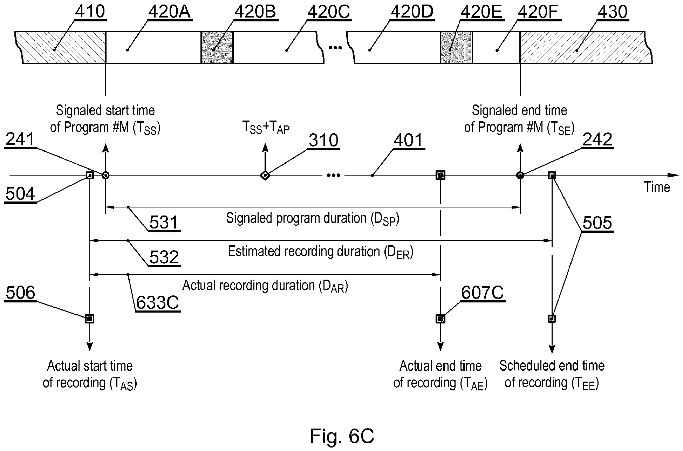

Fig. 6C presents a scenario where the scheduled recording ends earlier than the Estimated recording duration (D_{ER}). An analysis, according to the present invention, results in determining that at the time (607C) the recorded program has already finished, therefore the method will shorten the recording time accordingly. Thus, the Actual recording duration (D_{AR}) (633C) spans between time (506) and (607C).

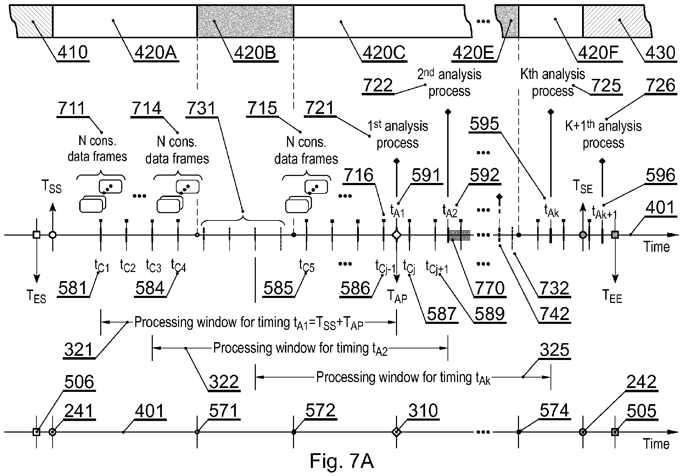

Figs. 7A-C depict data acquisition and analysis scenarios. All reference numerals in Figs. 7A-C starting with a digit other than '7' have been previously introduced in the specification and thus refer to already described items.

Fig. 7A depicts normal processing scenario, in which t_{A1} does not fall within an advertisements block (420B). In such case a processing window for time t_{A1} collects data in data frames collecting intervals (340) between times t_{C1} (581) and t_{C4} (584). When an advertisements blocks has been detected, the data frames collecting intervals (340) falling (fully or partially) within such advertisements block (420B) are discarded (i.e. audio and/or video fingerprints for these data sections are not computed). Therefore, after the advertisements block (420B) has ended, the method returns to collecting data in data frames collecting intervals (340) between times t_{C5} (585) and t_{Cj-1} (586) in order to execute processing window (321) analysis at a time t_{A1} (591). In such case the processing window (321) comprises data fingerprints prior to the advertising block (420B) and data collected after said advertising block (420B).

When the time t_{A1}, (591) is reached, the system invokes a process (721) of collecting (770) a number of N frames as defined by the parameter (270). For the collected frames a video and/or audio fingerprint is/are computed that will be compared to corresponding audio and/or video fingerprints stored during said processing window (321).

Referring back to a case of an advertisements block (420B) overlapping, fully or partially, a given data frames collecting interval (714, 731), it is up to system's configuration whether to discard such data frames collecting interval or to keep it in case said N frames (270) have been collected during said partial overlapping case.

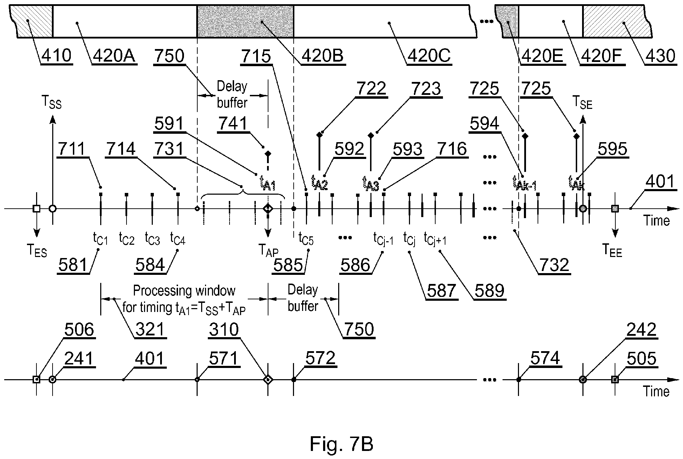

Fig. 7B depicts a case when the Analysis Postponement Time (T_{AP}) (310, 741) falls during an advertisements period (420B). In such a case there are two options possible:
(1) to introduce a delay buffer (750) in order to postpone said analysis time further by a delay time difference between the start of said advertisements block (420B) and said initial the Analysis Postponement Time (T_{AP}) wherein said delay time is added to the end of said advertisements block (420B); or
(2) to introduce a delay buffer (750) added at the end of said advertisements block (420B) wherein such delay buffer is relative to the duration of the processing window (320) and is preferably between 25% and 50% of duration of the processing window (320).

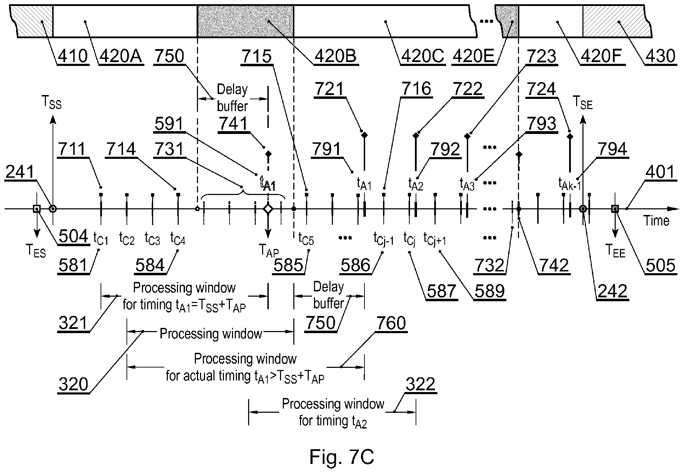

Fig. 7C shows application of scenario (1) as described with reference to Fig. 7B above.

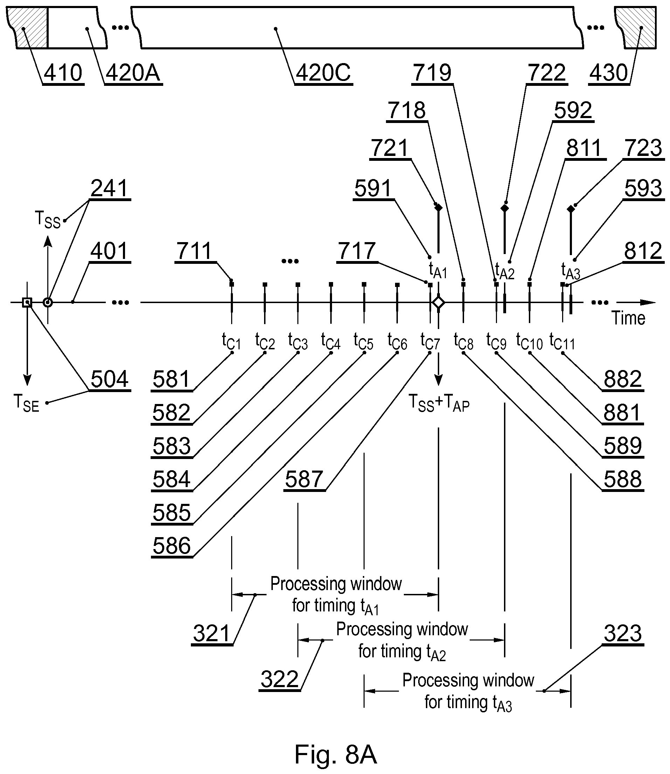

Fig. 8A shows data collecting scenario when a set of audio and/or video fingerprints is generated for a given processing window. For the sake of simplicity, this time there is not present any advertisements block. As may be seen readily, a processing window is a buffer (321, 322, 323) that it shifted as time elapses and its purpose is to hold at least one but preferably a plurality of audio and/or video fingerprints describing data frames collected during said predefined intervals (581 - 589, 881 - 882).

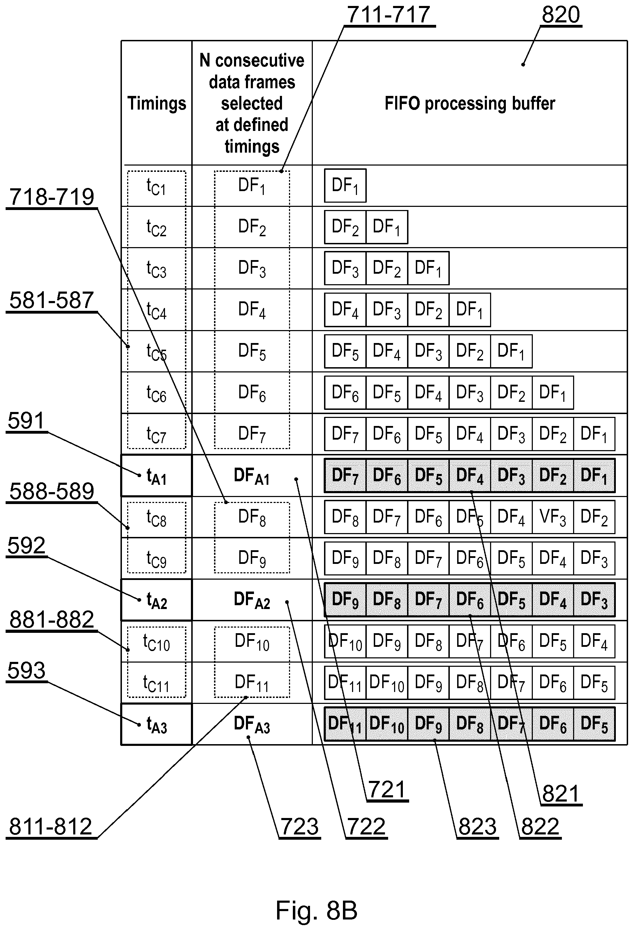

Fig. 8B presents a state of a processing window's FIFO queue of a predefined size, which preferably comprises data of audio and/or video fingerprints. As illustrated, at different points in time (581 - 587) said N frames (270) are selectively retrieved and for each set of N frames there is created a data frames buffer (711 - 717) wherein for each such buffer there are computed audio and/or video fingerprints.

In a first embodiment of the present invention, only audio fingerprints are computed, while in a second embodiment only video fingerprints are computed, while in a third embodiment both audio and video fingerprints are computed for a given set of N frames.

The content of the processing buffer (820) may be the respectively collected data frames and/or the computed audio and/or video fingerprints depending on particular system's configuration.

The processing window (321, 322, 323) collects data until it becomes full at time t_{C7} and the requirement of having a full processing window (321, 322, 323) at a time t_{A1} is thereby fulfilled. At the time t_{A1} the system executes the process (721) and collects N data frames (770) for evaluation against the processing window (321).

The process (721) may be executed in parallel to the subsequent data frames collecting interval t_{C8}. In another embodiment DF_{A1} may be the same as DF₈. Similarly, DF_{A2} may be the same as DF₁₀ and so on.

As time passes by, a new set of data frames collected during a subsequent t_{Cj} (for example DF₈) is entered to the queue and at the same time the oldest set of data frames collected during a given t_{Cj} (for example DF₁) is discarded from the queue. The process is repeated accordingly as new data are retrieved from the source data stream.

As may be seen, two new data frames collecting intervals (DF₈, DF₉) pass between DF_{A1} and DF_{A2}. It is a preferred approach because there is not any need to execute data analysis upon every addition of DF_{X} to the FIFO processing queue. Accordingly, the time difference between subsequent DF_{Ak} may be more than two DF_{X} intervals.

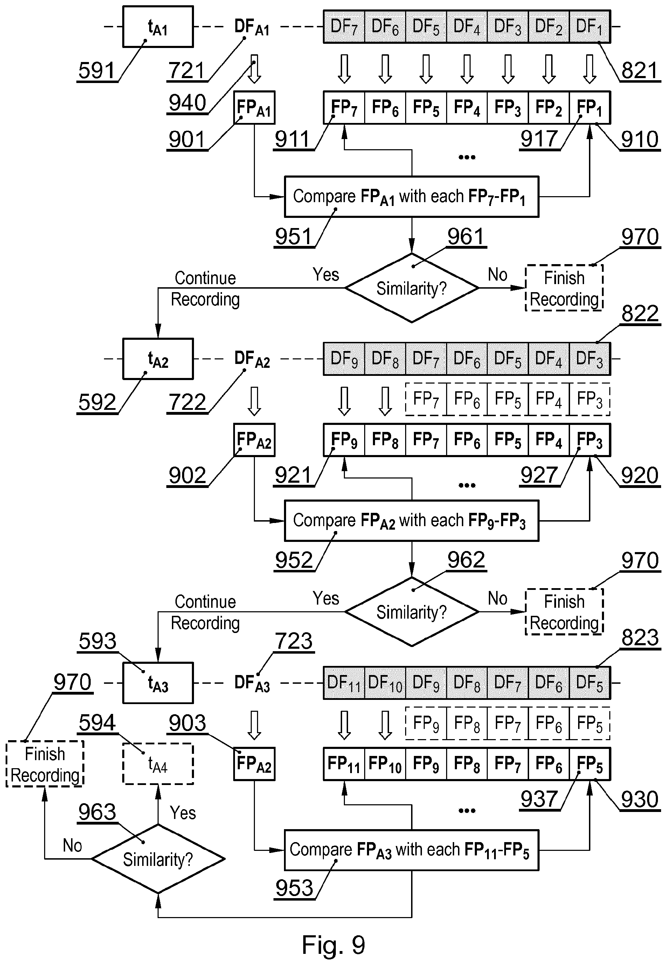

Fig. 9 shows a scenario of data similarity analysis. The process starts at a time of t_{A1} when there is collected said N data frames (770) for evaluation against the processing window (321) which is represented by a FIFO data buffer (821). For the purpose of the evaluation there are computed audio and/or video fingerprints FP_{A1} (901) for said DF_{A1}.

Further, for each data frames set constituting a subset (821) of the processing window, there are computed audio and/or video fingerprints (910).

When all source data fingerprints are available, there is executed a comparison (951) of the FP_{A1} with each of the FP_{7 -} FP₁ (911 - 917). As previously explained, the fingerprints, be it audio or video, are such that they may be compared in order to detect a match or level of similarity (961).

When determining whether the FP_{A1} is similar to the FP₇ - FP₁ fingerprints, there may be applied various approaches. A first approach may be to apply an average similarity level among all pairs FP_{A1} vs. FP_{X}. In this case an average similarity out of seven comparisons. Another approach is to select top half of the results (or a subset of said results in general), in this case say 4 results. Yet another approach is to set a threshold for a top result, for example if any of the 7 comparisons returns a similarity level above 90%, the similarity conditions is assumed to have been matched.

In case the similarity condition (961) is not fulfilled, the system considers that the current recording has finished and instructs the appropriate signal recording components accordingly (970). Otherwise, in case the similarity condition (961) is fulfilled, the system continues recording until t_{A2} (592) when the method re-executes the verification process for data then present in the processing window (822). As may be seen, the data processing continues in a loop until (823) the recording may be finished (970).

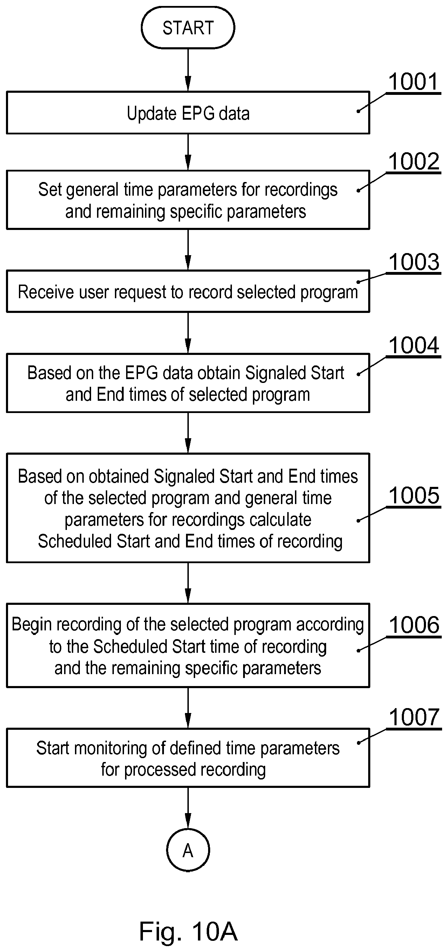

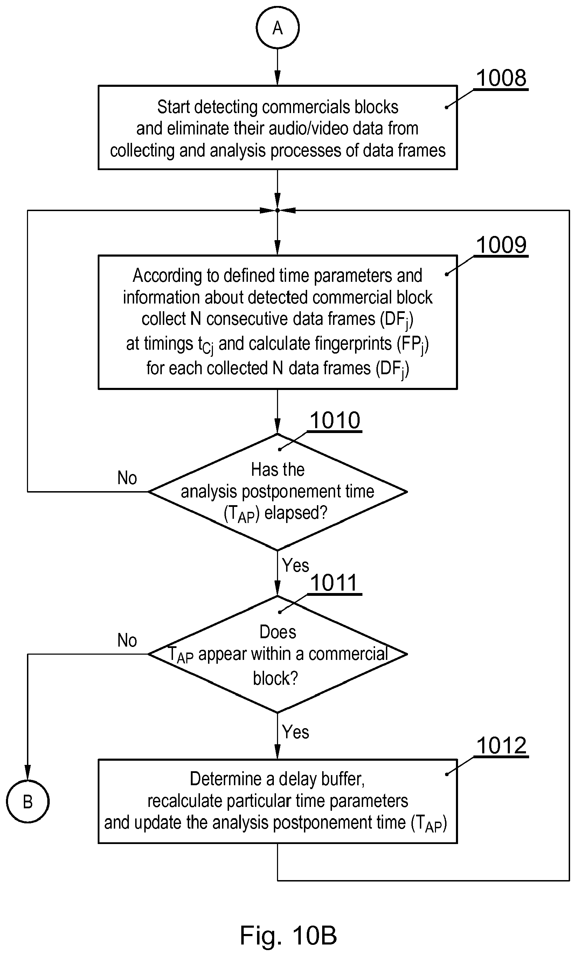

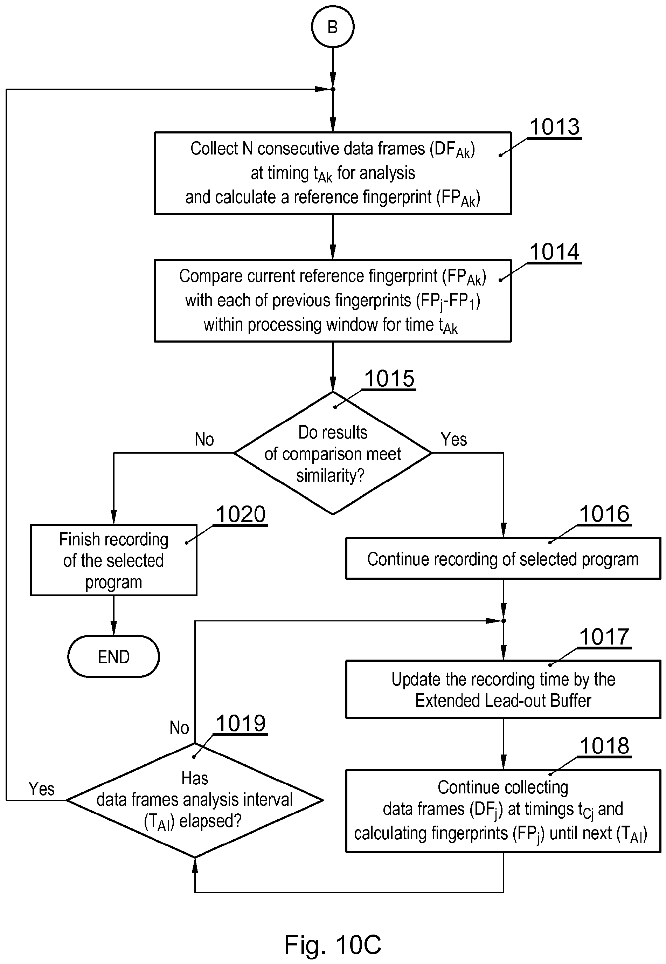

Figs. 10A-C show a method according to the present invention. This is an example of the method presented at relatively detailed level.

The method starts from receiving or updating EPG data identifying programs available at different times on different source channels (1001). Subsequently, the system sets (1002) general time parameters for recordings and remaining specific parameters as per Fig. 2 and Fig.3. Next, the method receives a user's request to record a selected program (1003).

Selection of a program results in that based on EPG data there may be obtained (1004) signaled start and end times of the selected program, which serve as a basis for determining (1005) scheduled start and end times of recording including said lead-in (331) and lead-out (332) times.

When the scheduled recording start is detected, the system begins recording of the selected program (1006) according to the scheduled start time of recording and the remaining specific parameters.

Subsequently, the system starts monitoring the defined time parameters for a recording being processed. These parameters comprise: the N parameter (270), the Analysis Postponement Time (T_{AP}) (310), the Processing Window duration (D_{PW}), the Data Frames Collecting Interval (T_{CI}) (340) as well as the Data Frames Analysis Interval (T_{AI}) (350).

Further, at step (1008) the system is processing audio and/or video data and detects commercials blocks wherein for such commercial blocks their audio/video data is eliminated from data collecting (with reference to further computing of audio and/or video fingerprints) and analysis processes of data frames.

Next, at step (1009), according to defined time parameters and information about detected commercial block, the method collects N consecutive data frames (D_{Fj}) at timings t_{Cj} and calculate video fingerprints (F_{Pj}) for each collected N data frames (D_{Fj}).

Subsequently, it is checked whether the analysis postponement time (T_{AP}) has elapsed (1010). If it has not, the system returns to step (1009) and otherwise advances to step (1011) where it checks whether the analysis postponement time (T_{AP}) falls within an advertisements block (420B). If it does not, the method advances to section (B) while if it does, at step (1012) the method determines a delay buffer, recalculates particular time parameters and updates the analysis postponement time (T_{AP}) in order to return to step (1009).

At step (1013) of the method, there are collected N consecutive data frames (DF_{Ak}) at timing t_{Ak} for analysis and calculate a reference fingerprint (FP_{Ak}). Next (1014) there is compared the current fingerprint (FP_{Ak}) with each of the previous fingerprints (FPⱼ - FP₁) present within the processing window for the time t_{Ak}. In different embodiments, not all fingerprints (FPⱼ - FP₁) will be compared with the reference fingerprint (FP_{Ak}).

Further, at step (1015) the system checks whether the results of comparison meet similarity requirements (as previously described with reference to Fig. 9). If the similarity threshold is not reached, the content currently received is considered dissimilar to the previous content and the recording may be stopped (1020). Otherwise, when the similarity threshold is reached, the content currently received is considered similar to the previous content and the recording may be continued (1016).

When the currently recorded program is continued, at step (1017) it may be necessary to update the recording end time by the Extended Lead-out Buffer (333) parameter. This may be necessary when the predicted recording end time is approaching and the analysis results in that the content currently recorder is still similar to the previous content (i.e. the same program is recorded).

Next the system returns to collecting data frames (DFⱼ) at timings t_{Cj} and to calculating fingerprints (FPⱼ) until the next (T_{AI}), which is verified at step (1019).

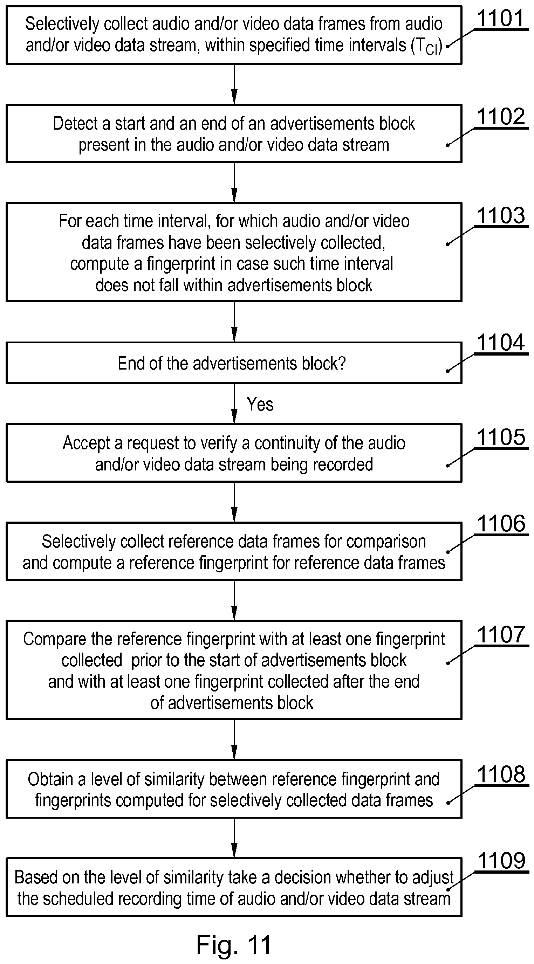

Fig. 11 shows a method according to the present invention. This is an example of the method presented at relatively high level and focusing on the fingerprints generation and verification in order to make a decision whether to stop or continue recording of a given audio and/or video data stream.

The method starts at step (1101) from selectively collecting audio and/or video data frames, from said audio and/or video data stream, within specified time intervals (t_{CI});
Subsequently, there is executed detecting a start and an end of an advertisements block (1102) present in said audio and/or video data stream and for each time interval, for which audio and/or video data frames have been selectively collected, there is effected computing (1103) a fingerprint in case such time interval does not fall within said advertisements block.

Next, after said end of the advertisements block (1104) (which might also be an indicator that a given program has ended) the method executed a step of accepting a request to verify a continuity (1105) of said audio and/or video data stream being recorded and then selectively collecting reference data frames (1106) for comparison and computing a reference fingerprint for said reference data frames.

Further, the method executes comparing (1107) said reference fingerprint with at least one fingerprint collected prior to the start of said advertisements block in order to obtain a level of similarity (1108) between said fingerprints and based on the level of similarity, taking a decision whether to adjust the scheduled recording time (1109) of said audio and/or video data stream.

It is clear that the method presented in Fig. 11 as a general implementation, may take advantage of any specific features presented with reference to the preceding drawings and the specification.

The method according to the present invention allows for more precise recording times and this results in decreasing storage requirements where possible or results in recording content in full while avoiding loosing parts of content that were aired after a predicted airing time. Therefore, the invention provides a useful, concrete and tangible result.

The present method analyzes audio and/or video data to adjust recording end time in an audio/video data receiver. Therefore, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for automatic adjustment of scheduled recording time may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for automatic adjustment of a scheduled recording time of an audio and/or video data stream being recorded, the method being **characterized in that** it comprises the steps of:
∘ selectively collecting video data frames (1101), from said audio and/or video data stream, within specified time intervals (t_{CI});
∘ detecting a start and an end of an advertisements block (1102) present in said audio and/or video data stream;
∘ for each time interval, for which video data frames have been selectively collected, computing (1103) a fingerprint in case such time interval does not fall within said advertisements block;
∘ after said end of the advertisements block (1104):
▪ accepting a request to verify a continuity (1105) of said audio and/or video data stream being recorded;
▪ selectively collecting reference video data frames (1106) for comparison and computing a reference fingerprint for said reference video data frames;
▪ comparing (1107) said reference fingerprint with at least one fingerprint collected prior to the start of said advertisements block in order to obtain a level of similarity (1108) between said fingerprints;
▪ based on the level of similarity, taking a decision whether to adjust the scheduled recording time (1109) of said audio and/or video data stream.

2. The method according to claim 1 wherein said selective collecting concerns collecting N of consecutive video data frames (270) at defined timings.

3. The method according to claim 2 wherein a type of said video data frame is taken into consideration during said selective collecting (IDR, I-frame).

4. The method according to claim 1 wherein said fingerprint is a data set, smaller than the referred data, that may be compared in order to determine a similarity level with another fingerprint.

5. The method according to claim 1 wherein when determining said level of similarity there is executed one of:
∘ computing an average similarity level among all fingerprints pairs;
∘ selecting a subset of top results;
∘ setting a threshold for a top result.

6. The method according to claim 1 wherein at least one of said time intervals falls after said end of the advertisements block.

7. The method according to claim 1 wherein there is executed a step of applying a time threshold (T_{AP}) that indicates how much time of said recording needs to pass before the method is invoked.

8. The method according to claim 1 that said accepting a request to verify a continuity is executed every time a predefined interval (T_{AI}, 350) has passed.

9. The method according to claim 1 wherein said selective collecting is executed as a first-in-first-out buffer of a specified size.

10. The method according to claim 9 wherein said first-in-first-out buffer comprises said fingerprints data.

11. A computer program comprising program code means for performing all the steps of the computer-implemented method according to claim 1 when said program is run on a computer.

12. A computer readable medium storing computer-executable instructions performing all the steps of the computer-implemented method according to claim 1 when executed on a computer.

13. System for automatic adjustment of a scheduled recording time of an audio and/or video data stream being recorded, the system comprising:
• an audio and/or video data stream reception block (120);
• a memory (140) configured to store temporary data as well as recordings data;
the system being **characterized in that** it further comprises:
• a controller (110) configured to execute all steps of the method according to claim 1.
